# EUROPÄISCHE PATENTANMELDUNG

(11) **EP 3 736 347 A1**
(43) Veröffentlichungstag der Anmeldung: **11.11.2020**
(21) Anmeldenummer: 19203025.2
(22) Anmeldetag: 14.10.2019
(51) Int. Cl.: C21B 5/06, C21B 13/00, C21B 13/02

(54) **NUTZUNG VON SAUERSTOFF AUS WASSERELEKTROLYSE BEI DER EISEN- UND/ODER STAHLERZEUGUNG**

(71) Anmelder: Primetals Technologies Austria GmbH, 4031 Linz (AT)
(72) Erfinder: Millner, Robert, 3382 Loosdorf (AT)
(74) Vertreter: Metals@Linz

(57) **Zusammenfassung**

Die Erfindung betrifft ein Verfahren zur Nutzung von bei Wasserelektrolyse anfallendem sauerstoffhaltigem Gas bei einer Eisen - und/oder Stahlerzeugung aus oxidischen Eisenträgern. Es wird gemäß zumindest einem Mitglied der Gruppe bestehend aus
- Zufuhr zu einem Reduktionsgas und/oder zu einem Reduktionsgasvorläufer für eine Direktreduktion,
- Nutzung als Oxidationsmittel für Brenner zur Erhöhung der Temperatur eines Reduktionsgases oder eines Reduktionsgasvorläufers für eine Direktreduktion,
- Zufuhr als Oxidationsmittel für Reformerbrenner eines Reformers zur Zubereitung von Reduktionsgas oder eines Reduktionsgasvorläufers für eine Direktreduktion,
- Zufuhr als Oxidationsmittel für einen Gasofen zur Erhitzung von Reduktionsgas oder eines Reduktionsgasvorläufers für eine Direktreduktion,
- Zufuhr als Oxidationsmittel in einem Kraftwerk für die Eisen- und/oder Stahlerzeugung,
genutzt.

Die Erfindung betrifft auch einen entsprechend ausgeführten Anlagenverbund.

## Beschreibung

### Gebiet der Technik

Die Erfindung betrifft ein Verfahren zur Nutzung von bei Wasserelektrolyse anfallendem sauerstoffhaltigem Gas bei einer Eisen - und/oder Stahlerzeugung aus oxidischen Eisenträgern.

### Stand der Technik

Es ist bekannt, oxidische Eisenträger zu mittels Reduktionsgas zu reduzieren, um Eisen beziehungsweise Stahl zu erzeugen. Beispielsweise wird auf der Hochofenroute flüssiges Roheisen erzeugt, das gegebenenfalls zu Stahl weiterverarbeitet wird. Beispielsweise wird durch Direktreduktion fester Eisenschwamm - auch direct reduced iron DRI genannt - erzeugt, der anschließend zu Eisen oder Stahl weiterverarbeitet wird.

Wasserstoff kann als reduzierende Komponente des Reduktionsgases genutzt werden. Es ist bekannt, Reduktionsgas praktisch vollständig aus Wasserstoff bestehen zu lassen, oder zur Herstellung eines Reduktionsgases anderen reduzierenden Gasen beziehungsweise Gasgemischen Wasserstoff zuzusetzen.

Eine bekannte Möglichkeit zur Herstellung von Wasserstoff ist Wasserelektrolyse, bei der Wasser in Wasserstoff und Sauerstoff gespalten wird. Verschiedene Verfahrenswege stehen dafür zur Verfügung; es fallen Wasserstoff beziehungsweise ein Gas mit hohem Wasserstoffgehalt, und Sauerstoff beziehungsweise ein Gas mit hohem Sauerstoffgehalt an.

Bei Reduktion unter Verwendung von Wasserstoff sind oft große Mengen Wasserstoff bereitzustellen. Bei Herstellung durch Wasserelektrolyse fallen dann auch große Mengen sauerstoffhaltiges Gas an, die für eine ressourcenschonende und wirtschaftliche Verfahrensführung in die Eisen- und/oder Stahlherstellung eingebunden werden sollten.

### Zusammenfassung der Erfindung

### Technische Aufgabe

Die vorliegende Anmeldung stellt Verfahren und Vorrichtung zur Einbindung von bei Wasserelektrolyse anfallendem sauerstoffhaltigem Gas bei einer Eisen- und/oder Stahlerzeugung bereit.

### Technische Lösung

Das geschieht durch ein
Verfahren zur Nutzung von
bei Wasserelektrolyse anfallendem sauerstoffhaltigem Gas bei einer Eisen - und/oder Stahlerzeugung
aus oxidischen Eisenträgern,
dadurch gekennzeichnet, dass
das sauerstoffhaltige Gas gemäß zumindest einem Mitglied der Gruppe bestehend aus
- Zufuhr zu einem Reduktionsgas und/oder zu einem Reduktionsgasvorläufer für eine Direktreduktion,
- Nutzung als Oxidationsmittel für Brenner zur Erhöhung der Temperatur eines Reduktionsgases oder eines Reduktionsgasvorläufers für eine Direktreduktion,
- Zufuhr als Oxidationsmittel für Reformerbrenner eines Reformers zur Zubereitung von Reduktionsgas oder eines Reduktionsgasvorläufers für eine Direktreduktion,
- Zufuhr als Oxidationsmittel für einen Gasofen zur Erhitzung von Reduktionsgas oder eines Reduktionsgasvorläufers für eine Direktreduktion,
- Zufuhr als Oxidationsmittel in einem Kraftwerk für die Eisen- und/oder Stahlerzeugung,
genutzt wird.

Das bei einer Wasserelektrolyse anfallende sauerstoffhaltige Gas hat einen Sauerstoffgehalt von zumindest 95 Volums%02 Gehalt bezogen auf relative Feuchte von 0%. Eine Gasmischung von 95 Volums% 02 und 5 Volums% H2O hat beispielsweise 100 Volums% 02 Gehalt bezogen auf relative Feuchte von 0%.

Die Eisenherstellung führt zu festem Produkt, beispielsweise fester Eisenschwamm.

### Vorteilhafte Wirkungen der Erfindung

Reduktionsgas für einen industriellen Direktreduktionsprozess wird aus kinetischen und thermodynamischen Gründen bei einer Temperatur von mindestens 750 °C den oxidischen Eisenträgern zugeleitet.
Es kann dazu auf mehrere Arten, direkt oder indirekt, erhitzt werden: in einem Gasofen mit indirektem Wärmeaustausch der Wärme aus einer exothermen Oxidation, oder mittels eines in den Reduktionsgasstrom ragenden Brenners - unter Einleitung der heißen Verbrennungsprodukte aus der Reaktion von dem Brenner zugeführtem Brennstoff und einem Oxidationsmittel - direkt, oder durch exotherme Reaktion einer Teilmenge des Reduktionsgases nach Zugabe eines Oxidationsmittels. Für all diese Erwärmungsarten kann das bei der Wasserelektrolyse anfallende sauerstoffhaltige Gas als Oxidationsmittel verwendet werden.
Statt dem Reduktionsgas, das den oxidischen Eisenträgern zugeleitet wird, kann auch ein Reduktionsgasvorläufer derart erhitzt werden; ein Reduktionsgasvorläufer hat noch nicht die Zusammensetzung des den oxidischen Eisenträgern zugeleiteten Reduktionsgases, seine Zusammensetzung wird noch - beispielsweise durch Zugabe weiterer Gase wie beispielsweise Wasserstoff - verändert.

Ein im Vergleich zu Luft erhöhter Sauerstoffgehalt des Oxidationsmittels für Reformerbrenner erlaubt höhere Flammen- und Brennraumtemperatur beziehungsweise geringeren Brennstoffverbrauch. Bei zu niedriger Temperatur wäre Entstehung von Kohlenstoff begünstigt, was den Katalysator des Reformers schädigen beziehungsweise seine Leistung vermindern kann. Bei höherer Temperatur verlaufen die Reaktionen im Reformer schneller, und es ist pro Zeiteinheit mehr Umsatz erzielbar. Der Sauerstoff kann beispielsweise einer Luftmenge zugeführt werden, die als Oxidationsmittel für Reformerbrenner vorgesehen ist; das kann beispielsweise nach einer Komprimierung der Luftmenge geschehen oder vor einer Komprimierung des Gemisches aus Luft und Sauerstoff. Es kann auch nach einer Vorwärmung der Luftmenge geschehen oder vor einer Vorwärmung des Gemisches aus Luft und Sauerstoff; die Vorwärmung kann beispielsweise durch Wärmetausch mit Reformerrauchgas stattfinden.

Bei industrieller Eisen- und/oder Stahlerzeugung wird auch Elektrizität benötigt, die oft in Kraftwerken für die Eisen- und/oder Stahlerzeugung erzeugt wird. Dabei werden oft exotherme Oxidationsreaktionen genutzt. Bei Wasserelektrolyse anfallendes sauerstoffhaltiges Gas kann dort als Oxidationsmittel genutzt werden.

Durch die vorgeschlagenen Nutzungen von bei Wasserelektrolyse anfallendem sauerstoffhaltigem Gas ist ressourcenschonende und wirtschaftliche Verfahrensführung in die Eisen- und/oder Stahlherstellung möglich. Nicht nur der Wasserstoff wird bei der Eisen- und/oder Stahlherstellung genutzt, sondern der bei der Wasserstoffherstellung ebenfalls anfallende Sauerstoff.

Vorzugsweise wird das bei Wasserelektrolyse anfallende sauerstoffhaltige Gas getrocknet, bevor es den vorgeschlagenen Nutzungen zugeführt wird. Bevorzugt ist eine Trocknung auf einen Wassergehalt von unter 2 Volums%. Feuchtigkeit im sauerstoffhaltigen Gas, besonders bevorzugt unter 1 Volums% Feuchtigkeit im sauerstoffhaltigen Gas. Je höher die Feuchtigkeit, desto mehr werden Flammentemperaturen durch die Feuchtigkeit erniedrigt, und desto mehr wird die Reduktionskraft eines das sauerstoffhaltige Gas empfangenden Gases vermindert.

Nach einer vorteilhaften Variante des Verfahrens wird bei der Wasserelektrolyse Dampf eingesetzt, der mittels zumindest eines Mitglieds der Gruppe bestehend aus
- Abwärme aus Rauchgas eines Reformers zur Herstellung von Reduktionsgas oder eines Reduktionsgasvorläufers für eine Direktreduktion,
- Abwärme aus Rauchgas eines Gasofens zur Erhitzung von Reduktionsgas oder eines Reduktionsgasvorläufers für eine Direktreduktion,
- Abwärme aus Kühlung von Produkt der Direktreduktion,
- Abwärme aus Topgas einer Direktreduktion,
- Abwärme aus Aufheizung von bei der Wasserelektrolyse gewonnenem Wasserstoff,
gewonnen wird.

Dadurch wird die Verfahrensführung der Eisen- und/oder Stahlherstellung bei Dampf konsumierenden Verfahren zur Wasserelektrolyse - beispielsweise solid oxide electrolysis SOE -ressourcenschonender und wirtschaftlicher möglich.

Wenn ein Elektrolichtbogenofen EAF zur Stahlherstellung vorhanden ist, kann auch Wärmetausch mit EAF-Abgas stattfinden zur Dampferzeugung.

Nach einer vorteilhaften Variante des Verfahrens wird Abwärme aus der Wasserelektrolyse zur Vorwärmung von bei der Eisen- und/oder Stahlerzeugung verwendeten Gasen genutzt.

Dadurch wird die Verfahrensführung der Eisen- und/oder Stahlherstellung ressourcenschonender und wirtschaftlicher möglich.

Nach einer vorteilhaften Variante des Verfahrens wird bei einer Zubereitung von Reduktionsgas für eine Direktreduktion Wasserstoff aus der Wasserelektrolyse einem Reduktionsgasvorläufer zugegeben, wobei die Zufuhr des sauerstoffhaltigen Gases zu dem Reduktionsgasvorläufer erfolgt, bevor der Wasserstoff zugegeben wird.

Dadurch wird die Verfahrensführung der Eisen- und/oder Stahlherstellung ressourcenschonender und wirtschaftlicher möglich.
Zufuhr von sauerstoffhaltigem Gas zu dem Reduktionsgasvorläufer führt zur Erhitzung infolge Verbrennung einer Teilmenge des Reduktionsgasvorläufers. Es ist vorteilhaft, Wasserstoff erst nach Zufuhr des sauerstoffhaltigen Gases zuzugeben, weil ansonsten aufgrund seiner relativ zu anderen Komponenten eines Reduktionsgasvorläufers - wie beispielsweise CO, CH4 - hohen Verbrennungsgeschwindigkeit relativ mehr Wasserstoff verbrannt werden und damit nicht mehr für die Direktreduktion zur Verfügung stehen würde. Wenn der Wasserstoff erst nach Sauerstoff zugegeben wird, reagiert der Sauerstoff in erster Linie mit den anderen Komponenten des Reduktionsvorläufergases, und ist schon weitgehend oder ganz verbraucht, wenn Wasserstoffzugabe erfolgt.

Es ist bekannt, einen Reformer zur Zubereitung von Reduktionsgas oder eines Reduktionsgasvorläufers für eine Direktreduktion zu nutzen. Ein zu reformierendes Gas wird im Reformer zu einem Reduktionsgas oder einem Reduktionsgasvorläufer umgesetzt.

Nach einer vorteilhaften Variante des Verfahrens wird das zu reformierende Gas unter Zugabe von Wasserstoff zu einer Mischung anderer Gase zubereitet, wobei der Wasserstoff einen Wassergehalt von zumindest 1,5 Volums%, bevorzugt zumindest 3 Volums%, besonders bevorzugt zumindest 10 Volums%, bis zu 40 Volums%, bevorzugt bis zu 18 Volums% aufweist.

Das hilft, Kohlenstoffablagerungen nach

CO + H2 → C + H2O

zu vermeiden und stellt einen Reaktionspartner für die Reformierungsreaktion

CH4 + H2O → CO + 3H2

zur Verfügung, wodurch das Reduktionspotential im Produkt der Reformierung beeinflusst wird. Reformierung mit H2O ist zudem weniger endotherm als Reformierung mit CO2, weshalb vergleichsweise weniger Energie in den Reformer zugeführt werden muss; weniger heiße Reformerrohre haben eine höhere Lebensdauer.

Der Wasserdampf im H2 stammt beispielsweise entweder aus einer den Wasserstoff liefernden Elektrolyse, oder er wird Wasserstoff durch Sättigung in einem Sättiger oder durch Zugabe von gesättigtem oder überhitztem Dampf zugeführt.

Nach einer vorteilhaften Variante des Verfahrens wird Topgas aus einer Direktreduktion teilweise zum Reformer zur Zubereitung von Reduktionsgas oder eines Reduktionsgasvorläufers für eine Direktreduktion recycliert, und es findet vor Eintritt eines zu reformierenden Gases - beziehungsweise Gasgemisches - in den Reformer Vorwärmung statt, wobei vor der Vorwärmung das zu reformierende Gas unter Zugabe von Wasserstoff aus der Wasserelektrolyse zubereitet wird. Die Zugabe von Wasserstoff kann zu einer Temperaturerniedrigung des zu reformierenden Gasgemisches führen, und endotherme Reaktion von Wasserstoff kann zu weiterer Temperaturerniedrigung führen. Um in einem effizienten Temperaturbereich arbeiten zu können, kann es also vorteilhaft sein, durch Vorwärmung im Vorfeld dafür zu sorgen, dass derartige Temperaturerniedrigungen nicht zu zu tiefen Temperaturen führen.

Die Vorwärmung kann beispielsweise durch Wärmetausch mit Rauchgas aus dem Reformer stattfinden.

Dadurch wird die Verfahrensführung der Eisen- und/oder Stahlherstellung ressourcenschonender und wirtschaftlicher möglich.
Auf eine gesonderte Wasserstoffvorwärmung kann bei so einer Verfahrensvariante verzichtet werden; grundsätzlich ist gesonderte Wasserstoffvorwärmung jedoch auch möglich. Durch die Zugabe von Wasserstoff vor einer Reformierung werden die Komponenten CO/CO2/CH4 eines gängigen Feedgases für einen Reformer verdünnt, wodurch pro Volumseinheit des zu reformierenden Gases weniger Reformierungsarbeit geleistet werden muss. Zugeführte Energie wird also mehr für Aufheizung und weniger für Reformierung genutzt, weshalb letztendlich weniger Brenngas für Reformerbrenner zur Befeuerung des Reformers eingesetzt werden muss. Außerdem wird ein Topgas entsprechend weniger konzentriert CO2 enthalten und daher bei Rezirkulierung weniger problematisch aufgrund Katalysatorzerfall durch Kohlenstoffablagerung sein.

Nach einer vorteilhaften Variante des Verfahrens wird Topgas aus einer Direktreduktion teilweise zum Gasofen zur Erhitzung von Reduktionsgas oder eines Reduktionsgasvorläufers für eine Direktreduktion recycliert, und findet vor Eintritt eines zu erhitzenden Gases in den Gasofen Wärmezufuhr statt, dadurch gekennzeichnet, dass vor der Wärmezufuhr das zu erhitzende Gas - beziehungsweise Gasgemisch - unter Zugabe von Wasserstoff aus der Wasserelektrolyse zubereitet wird. Die Zugabe von Wasserstoff kann zu einer Temperaturerniedrigung des Gasgemisches führen, und endotherme Reaktion von Wasserstoff kann zu weiterer Temperaturerniedrigung führen. Um in einem effizienten Temperaturbereich arbeiten zu können, kann es also vorteilhaft sein, durch Vorwärmung im Vorfeld dafür zu sorgen, dass derartige Temperaturerniedrigungen nicht zu zu tiefen Temperaturen führen.
Die Wärmezufuhr kann beispielsweise durch Wärmetausch mit Rauchgas aus dem Gasofen stattfinden.

Nach einer vorteilhaften Variante des Verfahrens wird Wasser aus einem Wassersystem einer Direktreduktion bei der Wasserelektrolyse genutzt.

Dadurch wird die Verfahrensführung der Eisen- und/oder Stahlherstellung ressourcenschonender und wirtschaftlicher möglich.

Der bei der Wasserelektrolyse erzeugte Wasserstoff kann auch derart genutzt werden, dass er mit - beispielsweise aus Topgas, Reformerrauchgas, Gasofenrauchgas, EAF-Abgas, Konverterabgas, Gichtgas, oder anderen Abgasen eines Stahlwerks entferntem - Kohlendioxid CO2 zur Methanproduktion (synthetic natural gas SNG) nach

CO2 + 4H2 → CH4 + 2H2O

und/oder zur Methanolproduktion nach

CO2 + 3H2 → CH3OH + H2O

eingesetzt wird. Das SNG kann dann beispielsweise als Teilmenge eines einem Reformer zur Reformierung zugeführten Gases beziehungsweise Gasgemisches genutzt werden, um Reduktionsgas herzustellen. Andere mögliche Nutzungen im Umfeld einer Direktreduktion sind Zuspeisung zu einem Reduktionsgasvorläufer für eine Direktreduktion nach bereits erfolgter Reformierung, oder Einleitung in ein Direktreduktionsaggregat zwecks Karburierung des Produktes der Direktreduktion.

Nach einer vorteilhaften Variante des Verfahrens wird das zu reformierende Gas unter Zugabe von Wasserstoff und Wasserdampf zu einer Mischung anderer Gase zubereitet, wobei das zu reformierende Gas einen Wasserdampfgehalt von zumindest 7 Volums%, bevorzugt zumindest 10 Volums%, besonders bevorzugt mindestens 12 Volums%, bis zu 20 Volums%, bevorzugt bis zu 18 Volums% aufweist.

Das hilft, Kohlenstoffablagerungen, beispielsweise nach

CO + H2 → C + H2O

zu vermeiden und stellt einen Reaktionspartner für die Reformierungsreaktion

CH4 + H2O → CO + 3H2

zur Verfügung, wodurch das Reduktionspotential im Produkt der Reformierung beeinflusst wird. Reformierung mit H2O ist zudem weniger endotherm als Reformierung mit CO2, weshalb vergleichsweise weniger Energie in den Reformer zugeführt werden muss; weniger heiße Reformerrohre haben eine höhere Lebensdauer.

Ein weiterer Gegenstand der vorliegenden Anmeldung ist eine Signalverarbeitungseinrichtung mit einem maschinenlesbaren Programmcode, dadurch gekennzeichnet, dass er Regelbefehle zur Durchführung eines erfindungsgemäßen Verfahrens aufweist.

Ein weiterer Gegenstand der vorliegenden Anmeldung ist ein maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Ein weiterer Gegenstand der vorliegenden Anmeldung ist ein Speichermedium mit einem darauf gespeicherten erfindungsgemäßen maschinenlesbaren Programmcode.

Ein weiterer Gegenstand der vorliegenden Anmeldung ist ein Anlagenverbund zur Eisen - und/oder Stahlerzeugung, umfassend eine Wasserelektrolyse-Anlage mit einer Sauerstoff-Ausleitung zum Ausleiten von bei Wasserelektrolyse entstehendem Sauerstoff aus der Wasserelektrolyse-Anlage, einen Direktreduktionsreaktor zur Direktreduktion von oxidischen Eisenträgern, und zumindest ein Mitglied der Gruppe bestehend aus den Mitgliedern
- Reduktionsgaszufuhrleitung zur Zufuhr von Reduktionsgas in den Direktreduktionsreaktor,
- Reduktionsgasvorläuferleitung zur Zufuhr von Reduktionsgasvorläufer zur Reduktionsgaszufuhrleitung oder zu einer Reduktionsgas zubereitenden Vorrichtung,
- Brenner zur Erhöhung der Temperatur eines Reduktionsgases oder eines Reduktionsgasvorläufers,
- Reformer zur Zubereitung von Reduktionsgas oder von Reduktionsgasvorläufer,
- Gasofen zur Erhitzung von Reduktionsgas oder Reduktionsgasvorläufer,
- Kraftwerk zur Erzeugung von Elektrizität für die Eisen- und/oder Stahlerzeugung,
dadurch gekennzeichnet, dass
die Sauerstoff-Ausleitung
in zumindest ein Mitglied der Gruppe bestehend aus den Mitgliedern
- Reduktionsgaszufuhrleitung zur Zufuhr von Reduktionsgas in den Direktreduktionsreaktor,
- Reduktionsgasvorläuferleitung zur Zufuhr von Reduktionsgasvorläufer zur Reduktionsgaszufuhrleitung oder zu einer Reduktionsgas zubereitenden Vorrichtung,
- Brenner zur Erhöhung der Temperatur eines Reduktionsgases oder eines Reduktionsgasvorläufers,
- Oxidationsmittelzuleitung eines Reformerbrenners eines Reformers zur Zubereitung von Reduktionsgas oder von Reduktionsgasvorläufer,
- Gasofen zur Erhitzung von Reduktionsgas oder Reduktionsgasvorläufer,
- Oxidationsmittelzufuhr eines Kraftwerks zur Erzeugung von Elektrizität für die Eisen- und/oder Stahlerzeugung,
mündet.

Im Rahmen der Beschreibung des Anlagenverbundes steht der Begriff Sauerstoff auch für das im Rahmen des erfindungsgemäßen Verfahrens genannte sauerstoffhaltige Gas.

Der Direktreduktionsreaktor ist beispielsweise ein Direktreduktionsschacht, ein Wirbelschichtreaktor, ein Fließbettreaktor. Es kann jeweils ein einzelner oder mehrere derartige Direktreduktionsreaktoren vorhanden sein.

Nach einer vorteilhaften Ausführungsform mündet eine Dampfzuleitung in die Wasserelektrolyse-Anlage, wobei die Dampfzuleitung von zumindest einem Mitglied der Gruppe bestehend aus den Mitgliedern
- Wärmetauscher zum Wärmetausch mit Rauchgas des Reformers zur Zubereitung von Reduktionsgas oder von Reduktionsgasvorläufer,
- Wärmetauscher zum Wärmetausch mit Rauchgas des Gasofens zur Erhitzung von Reduktionsgas oder Reduktionsgasvorläufer,
- Wärmetauscher zum Wärmetausch mit Topgas aus dem Direktreduktionsreaktor,
- Wärmetauscher zum Wärmetausch mit aus einer Vorrichtung zur Kühlung von Produkt der Direktreduktion ausgeleitetem Kühlgas,
- Wärmetauscher zum Wärmetausch mit aus einer Vorrichtung zur Aufheizung von in der Wasserelektrolyse-Anlage gewonnenem Wasserstoff ausgeleitetem Abgas,
ausgeht.

Wenn ein Elektrolichtbogenofen EAF zur Stahlherstellung vorhanden ist, kann auch Wärmetausch mit EAF-Abgas stattfinden zur Dampferzeugung. Die Dampfzuleitung geht dann von einem Wärmetauscher zum Wärmetausch mit dem EAF-Abgas aus.

Nach einer vorteilhaften Ausführungsform ist zumindest eine Vorrichtung zur Vorwärmung zumindest eines bei der Eisen- und/oder Stahlerzeugung verwendeten Gases vorhanden, wobei diese zur Nutzung von Abwärme der Wasserelektrolyse-Anlage zur Vorwärmung geeignet ist.

Nach einer vorteilhaften Ausführungsform münden die Sauerstoff-Ausleitung und eine von der Wasserelektrolyse-Anlage ausgehende Wasserstoff-Ausleitung zur Ausleitung von Wasserstoff aus der Wasserelektrolyse-Anlage in zumindest eine Reduktionsgasvorläuferleitung zur Zufuhr von Reduktionsgasvorläufer zur Reduktionsgaszufuhrleitung oder zu einer Reduktionsgas zubereitenden Vorrichtung, wobei die Sauerstoff-Ausleitung
vor
der Wasserstoff-Ausleitung mündet
in Richtung entlang der Reduktionsgasvorläuferleitung zur Reduktionsgaszufuhrleitung oder in Richtung zur Reduktionsgas zubereitenden Vorrichtung gesehen.

Nach einer vorteilhaften Ausführungsform geht vom Direktreduktionsreaktor eine Topgasrecycleleitung zur Recyclierung von Topgas zum Reformer aus, wobei die Topgasreycleleitung in eine Reformierungsgasleitung zur Zufuhr von zu reformierendem Gas in den Reformer mündet, in welche auch die Wasserstoff-Ausleitung mündet,
und wobei in der Reformierungsgasleitung eine Vorwärmvorrichtung vorhanden ist vom Reformer aus gesehen vor den Mündungen von Topgasrecycleleitung und Wasserstoff-Ausleitung.

Nach einer vorteilhaften Ausführungsform vom Direktreduktionsreaktor eine Topgasrecycleleitung zur Recyclierung von Topgas zum Gasofen aus, wobei die Topgasreycleleitung in eine Gasofeneinleitung zur Einleitung von zu erhitzendem Gas in den Gasofen mündet, in welche auch die Wasserstoff-Ausleitung mündet,
und wobei in der Gasofeneinleitung eine Vorwärmvorrichtung vorhanden ist vom Gasofen aus gesehen vor den Mündungen von Topgasrecycleleitung und Wasserstoff-Ausleitung.

Nach einer vorteilhaften Ausführungsform ist eine Anlage zur Methanproduktion und/oder eine Anlage zur Methanolproduktion vorhanden, in die die Wasserstoff-Ausleitung mündet, wobei die Anlage zur Methanproduktion und/oder die Anlage zur Methanolproduktion zumindest eine Zuleitung für Kohlendioxid CO2 aufweist.

Bevorzugt enthält der erfindungsgemäße Anlagenverbund zur Eisen- und/oder Stahlerzeugung auch eine Signalverarbeitungseinrichtung mit einem maschinenlesbaren Programmcode, dadurch gekennzeichnet, dass er Regelbefehle zur Durchführung eines erfindungsgemäßen Verfahrens aufweist.

Bevorzugt enthält der erfindungsgemäße Anlagenverbund zur Eisen- und/oder Stahlerzeugung auch einen maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Bevorzugt enthält der erfindungsgemäße Anlagenverbund zur Eisen- und/oder Stahlerzeugung auch ein Speichermedium mit einem darauf gespeicherten erfindungsgemäßen maschinenlesbaren Programmcode.

### Kurze Beschreibung der Zeichnungen

Die Erfindung wird anhand schematischer beispielhafter Darstellungen von Ausführungsformen erläutert.
Figur 1 zeigt schematisch an einer Ausführungsform eines erfindungsgemäßen Anlagenverbundes die Durchführung eines erfindungsgemäßen Verfahrens mit einem Reformer.
Figur 2 zeigt schematisch an einer Ausführungsform eines erfindungsgemäßen Anlagenverbundes die Durchführung eines erfindungsgemäßen Verfahrens mit einem Gasofen.
Figuren 3, 4, 5 zeigen weitere Varianten von weitgehend auf Figur 1 basierenden Ausführungsformen.
Figur 6 zeigt eine weitere Variante einer weitgehend auf Figur 2 basierenden Ausführungsform.

Zur besseren Übersichtlichkeit wurden in den Figuren für vergleichbare Elemente dieselben Bezugszeichen vergeben.

### Beschreibung der Ausführungsformen

### Beispiele

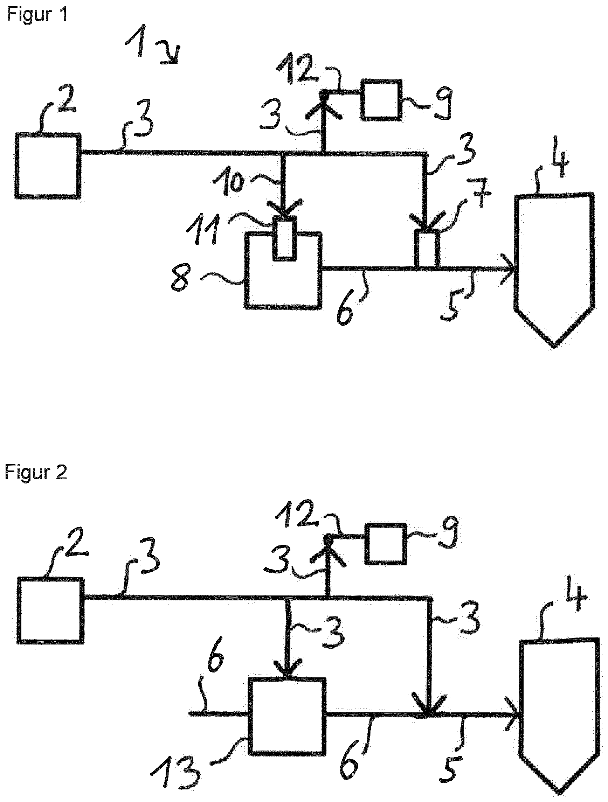

Figur 1 zeigt einen Anlagenverbund zur Eisenerzeugung 1, umfassend eine Wasserelektrolyse-Anlage 2 mit einer Sauerstoff-Ausleitung 3 zum Ausleiten von bei Wasserelektrolyse entstehendem Sauerstoff aus der Wasserelektrolyse-Anlage 2 und einen Direktreduktionsreaktor 4 zur Direktreduktion von oxidischen Eisenträgern. Er umfasst auch eine Reduktionsgaszufuhrleitung 5 zur Zufuhr von Reduktionsgas in den Direktreduktionsreaktor 4, eine Reduktionsgasvorläuferleitung 6 zur Zufuhr von Reduktionsgasvorläufer zur Reduktionsgaszufuhrleitung 5, einen Brenner 7 zur Erhöhung der Temperatur eines Reduktionsgasvorläufers, einen Reformer 8 zur Zubereitung von Reduktionsgasvorläufer, und ein Kraftwerk 9 zur Erzeugung von Elektrizität für die Eisen- und/oder Stahlerzeugung.

Die Sauerstoff-Ausleitung 3 mündet in den an der Reduktionsgasvorläuferleitung 6 angeordneten Brenner 7 zur Erhöhung der Temperatur des in dieser geleiteten Reduktionsgasvorläufers. Sie mündet auch in die Oxidationsmittelzuleitung 10 des Reformerbrenners 11 des Reformers 8 zur Zubereitung von Reduktionsgasvorläufer. Zusätzlich mündet die Sauerstoff-Ausleitung 3 auch in die Oxidationsmittelzufuhr 12 des Kraftwerks 9 zur Erzeugung von Elektrizität für die Eisenerzeugung.
Zur besseren Übersichtlichkeit sind dem Fachmann bekanntermaßen vorhandene Leitungen wie beispielsweise zur Zufuhr von zu reformierendem Gas zum Reformer 8 oder zur Ausleitung von Topgas aus dem Direktreduktionsreaktor 4 nicht gezeigt.

Das bei Wasserelektrolyse anfallende sauerstoffhaltige Gas wird bei der Eisenerzeugung in dem Anlagenverbund als Oxidationsmittel dem Brenner 7 zur Erhöhung der Temperatur des Reduktionsgasvorläufers zugeführt. Durch Einleitung der heißen Verbrennungsprodukte und Temperaturerhöhung ändert sich die Zusammensetzung des Reduktionsgasvorläufers und Reduktionsgas entsteht.
Das bei Wasserelektrolyse anfallende sauerstoffhaltige Gas wird auch als Oxidationsmittel für den Reformerbrenner 11 des Reformers 8 zur Zubereitung des Reduktionsgasvorläufers zugeführt.
Das bei Wasserelektrolyse anfallende sauerstoffhaltige Gas wird auch als Oxidationsmittel in dem Kraftwerk 9 genutzt.

Figur 2 zeigt in zu Figur 1 weitgehend analoger Darstellung einen Anlagenverbund 1 zur Eisenerzeugung, umfassend eine Wasserelektrolyse-Anlage 2 mit einer Sauerstoff-Ausleitung 3 zum Ausleiten von bei Wasserelektrolyse entstehendem Sauerstoff aus der Wasserelektrolyse-Anlage und einen Direktreduktionsreaktor 4 zur Direktreduktion von oxidischen Eisenträgern. Er umfasst auch eine Reduktionsgaszufuhrleitung 5 zur Zufuhr von Reduktionsgas in den Direktreduktionsreaktor 4, eine Reduktionsgasvorläuferleitung 6 zur Zufuhr von Reduktionsgasvorläufer zur Reduktionsgaszufuhrleitung 5, einen Gasofen 13 zur Erhitzung von Reduktionsgasvorläufer, und Kraftwerk 9 zur Erzeugung von Elektrizität für die Eisenerzeugung.

Die Sauerstoff-Ausleitung 3 mündet in die Reduktionsgasvorläuferleitung 6.

Die Sauerstoff-Ausleitung 3 mündet auch ich den Gasofen 13 zur Erhitzung von Reduktionsgasvorläufer.

Zusätzlich mündet die Sauerstoff-Ausleitung 3 auch in die Oxidationsmittelzufuhr 12 des Kraftwerks 9 zur Erzeugung von Elektrizität für die Eisenerzeugung.

Das bei Wasserelektrolyse anfallende sauerstoffhaltige Gas wird bei der Eisenerzeugung in dem Anlagenverbund dem Reduktionsgasvorläufer zugeführt, wobei dieser durch exotherme Reaktion einer Teilmenge des Reduktionsgasvorläufers erhitzt wird. Durch heiße Verbrennungsprodukte und Temperaturerhöhung ändert sich die Zusammensetzung des Reduktionsgasvorläufers und Reduktionsgas entsteht.
Das bei Wasserelektrolyse anfallende sauerstoffhaltige Gas wird auch als Oxidationsmittel in dem Gasofen 13 zur Erhitzung von Reduktionsgasvorläufer genutzt.
Das bei Wasserelektrolyse anfallende sauerstoffhaltige Gas wird auch als Oxidationsmittel in dem Kraftwerk 9 genutzt.

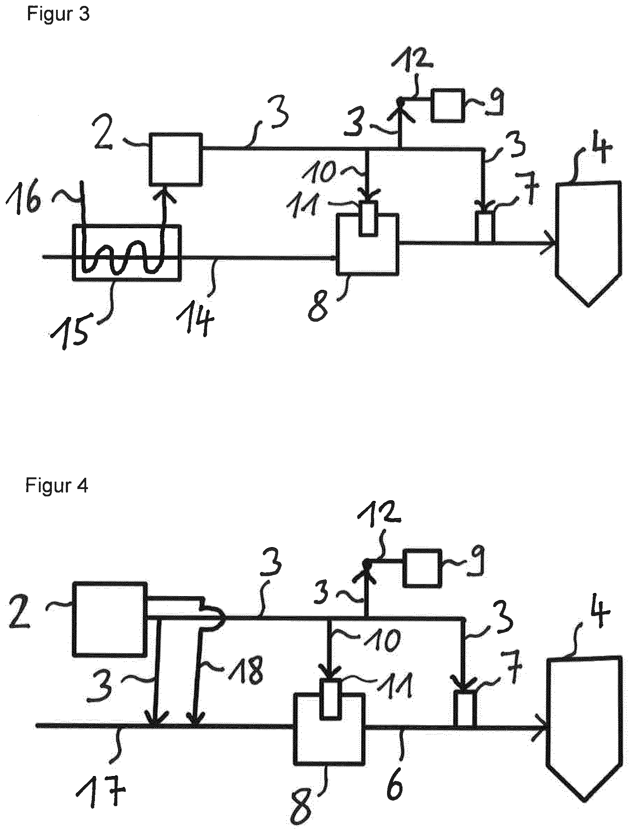

Figur 3 zeigt in zu Figur 1 weitgehend analoger Darstellung in einem Anlagenverbund 1 zur Eisenerzeugung, wie Abwärme aus dem in der Reformerrauchgasleitung 14 strömenden Rauchgas aus dem Reformer 8 im Wärmetauscher 15 zur Herstellung von Dampf in der Dampfzuleitung 16 genutzt wird. Die Dampfzuleitung 16 mündet in die Wasserelektrolyse-Anlage 2, wo der Dampf bei der Wasserelektrolyse eingesetzt wird.

Figur 4 zeigt in einer zu Figur 1 weitgehend analogen Darstellung, wie einem Reduktionsgasvorläufer in der Reduktionsgasvorläuferleitung 17 sowohl sauerstoffhaltiges Gas über eine Mündung der Sauerstoff-Ausleitung 3 als auch Wasserstoff aus der Wasserelektrolyse über eine Mündung der Wasserstoff-Ausleitung 18 zugegeben wird. In Richtung entlang der Reduktionsgasvorläuferleitung zur Reduktionsgaszufuhrleitung gesehen mündet die Sauerstoff-Ausleitung 3 vor der Wasserstoff-Ausleitung 18.

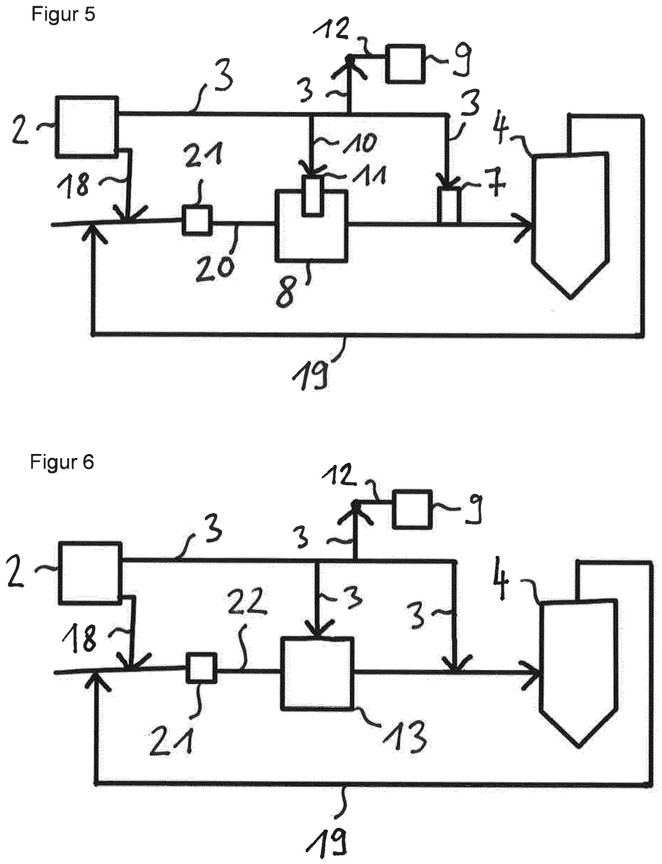

Figur 5 zeigt in einer zu Figur 1 weitgehend analogen Darstellung, wie vom Direktreduktionsreaktor 4 eine Topgasrecycleleitung 19 zur Recyclierung von Topgas zum Reformer 8 ausgeht. Die Topgasreycleleitung 19 mündet in eine Reformierungsgasleitung 20 zur Zufuhr von zu reformierendem Gas in den Reformer 8. In die Reformierungsgasleitung 20 mündet auch die Wasserstoff-Ausleitung 18. In der Reformierungsgasleitung 20 ist eine Vorwärmvorrichtung 21 vorhanden. Vom Reformer 8 aus gesehen ist die Vorwärmvorrichtung 21 vor den Mündungen von Topgasrecycleleitung 19 und Wasserstoff-Ausleitung 18 angeordnet.

Eine analoge Darstellung ist für einen Gasofen 13 mit Gasofeneinleitung 22 in Figur 6 gezeigt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination in einem erfindungsgemäßen Verfahren kombinierbar.
Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.
Die beschriebenen Eigenschaften, Merkmale und Vorteile der Erfindung sowie die Art und Weise, wie diese erreicht werden, werden klarer und deutlicher verständlich im Zusammenhang mit der Beschreibung des beziehungsweise der Ausführungsbeispiele der Erfindung, die im Zusammenhang mit den Zeichnungen näher erläutert werden. Das beziehungsweise die Ausführungsbeispiele dient beziehungsweise dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einer beliebigen der Ansprüche kombiniert werden.
Obwohl die Erfindung im Detail durch das beziehungsweise die bevorzugten Ausführungsbeispiele näher illustriert und beschrieben wurde, so ist die Erfindung nicht durch das beziehungsweise die offenbarten Beispiele eingeschränkt und andere Variationen können hieraus abgeleitet werden, ohne den Schutzumfang der Erfindung gemäß den Ansprüchen zu verlassen.

### Liste der Bezugszeichen

- 1: Anlagenverbund zur Eisenerzeugung
- 2: Wasserelektrolyse-Anlage
- 3: Sauerstoff-Ausleitung
- 4: Direktreduktionsreaktor
- 5: Reduktionsgaszufuhrleitung
- 6: Reduktionsgasvorläuferleitung
- 7: Brenner
- 8: Reformer
- 9: Kraftwerk
- 10: Oxidationsmittelzuleitung
- 11: Reformerbrenner
- 12: Oxidationsmittelzufuhr
- 13: Gasofen
- 14: Reformerrauchgasleitung
- 15: Wärmetauscher
- 16: Dampfzuleitung
- 17: Reduktionsgasvorläuferleitung
- 18: Wasserstoff-Ausleitung
- 19: Topgasrecycleleitung
- 20: Reformierungsgasleitung
- 21: Vorwärmvorrichtung
- 22: Gasofeneinleitung

## Patentansprüche

1. Verfahren zur Nutzung von
bei Wasserelektrolyse anfallendem sauerstoffhaltigem Gas bei einer Eisen - und/oder Stahlerzeugung
aus oxidischen Eisenträgern,
**dadurch gekennzeichnet, dass**
das sauerstoffhaltige Gas gemäß zumindest einem Mitglied der Gruppe bestehend aus
- Zufuhr zu einem Reduktionsgas und/oder zu einem Reduktionsgasvorläufer für eine Direktreduktion,
- Nutzung als Oxidationsmittel für Brenner zur Erhöhung der Temperatur eines Reduktionsgases oder eines Reduktionsgasvorläufers für eine Direktreduktion,
- Zufuhr als Oxidationsmittel für Reformerbrenner eines Reformers zur Zubereitung von Reduktionsgas oder eines Reduktionsgasvorläufers für eine Direktreduktion,
- Zufuhr als Oxidationsmittel für einen Gasofen zur Erhitzung von Reduktionsgas oder eines Reduktionsgasvorläufers für eine Direktreduktion,
- Zufuhr als Oxidationsmittel in einem Kraftwerk für die Eisen- und/oder Stahlerzeugung,
genutzt wird.

2. Verfahren nach Anspruch 1, **dadurch gekennzeichnet, dass** bei der Wasserelektrolyse Dampf eingesetzt wird, der mittels zumindest eines Mitglieds der Gruppe bestehend aus
- Abwärme aus Rauchgas eines Reformers zur Herstellung von Reduktionsgas oder eines Reduktionsgasvorläufers für eine Direktreduktion,
- Abwärme aus Rauchgas eines Gasofens zur Erhitzung von Reduktionsgas oder eines Reduktionsgasvorläufers für eine Direktreduktion,
- Abwärme aus Kühlung von Produkt der Direktreduktion,
- Abwärme aus Topgas einer Direktreduktion,
- Abwärme aus Aufheizung von bei der Wasserelektrolyse gewonnenem Wasserstoff,
gewonnen wird.

3. Verfahren nach Anspruch 1 oder 2, **dadurch gekennzeichnet, dass** Abwärme aus der Wasserelektrolyse zur Vorwärmung von bei der Eisen- und/oder Stahlerzeugung verwendeten Gasen genutzt wird.

4. Verfahren nach einem der Ansprüche 1 bis 3, **dadurch gekennzeichnet, dass** bei einer Zubereitung von Reduktionsgas für eine Direktreduktion Wasserstoff aus der Wasserelektrolyse einem Reduktionsgasvorläufer zugegeben wird, wobei die Zufuhr des sauerstoffhaltigen Gases zu dem Reduktionsgasvorläufer erfolgt, bevor der Wasserstoff zugegeben wird.

5. Verfahren nach einem der Ansprüche 1 bis 4, **dadurch gekennzeichnet, dass** das zu reformierende Gas unter Zugabe von Wasserstoff zu einer Mischung anderer Gase zubereitet wird, wobei der Wasserstoff einen Wassergehalt von zumindest 1,5 Volums%, bevorzugt zumindest 3 Volums%, besonders bevorzugt zumindest 10 Volums%, bis zu 40 Volums%, bevorzugt bis zu 18 Volums% aufweist.

6. Verfahren nach einem der Ansprüche 1 bis 5, **dadurch gekennzeichnet, dass** Topgas aus einer Direktreduktion teilweise zum Reformer zur Zubereitung von Reduktionsgas oder eines Reduktionsgasvorläufers für eine Direktreduktion recycliert wird, und vor Eintritt eines zu reformierenden Gases in den Reformer Vorwärmung stattfindet, wobei vor der Vorwärmung das zu reformierende Gas unter Zugabe von Wasserstoff aus der Wasserelektrolyse zubereitet wird.

7. Verfahren nach einem der Ansprüche 1 bis 6, **dadurch gekennzeichnet, dass** Topgas aus einer Direktreduktion teilweise zum Gasofen zur Erhitzung von Reduktionsgas oder eines Reduktionsgasvorläufers für eine Direktreduktion recycliert wird, und vor Eintritt eines zu erhitzenden Gases in den Gasofen Wärmezufuhr stattfindet, **dadurch gekennzeichnet, dass** vor der Wärmezufuhr das zu erhitzende Gas unter Zugabe von Wasserstoff aus der Wasserelektrolyse zubereitet wird.

8. Verfahren nach einem der Ansprüche 1 bis 7, **dadurch gekennzeichnet, dass** Wasser aus einem Wassersystem einer Direktreduktion bei der Wasserelektrolyse genutzt wird.

9. Anlagenverbund (1) zur Eisen - und/oder Stahlerzeugung, umfassend eine Wasserelektrolyse-Anlage (2) mit einer Sauerstoff-Ausleitung (3) zum Ausleiten von bei Wasserelektrolyse entstehendem Sauerstoff aus der Wasserelektrolyse-Anlage (2), einen Direktreduktionsreaktor (4) zur Direktreduktion von oxidischen Eisenträgern, und zumindest ein Mitglied
der Gruppe bestehend aus den Mitgliedern
- Reduktionsgaszufuhrleitung (5) zur Zufuhr von Reduktionsgas in den Direktreduktionsreaktor (4),
- Reduktionsgasvorläuferleitung (6) zur Zufuhr von Reduktionsgasvorläufer zur Reduktionsgaszufuhrleitung (5) oder zu einer Reduktionsgas zubereitenden Vorrichtung,
- Brenner (7) zur Erhöhung der Temperatur eines Reduktionsgases oder eines Reduktionsgasvorläufers,
- Reformer (8) zur Zubereitung von Reduktionsgas oder von Reduktionsgasvorläufer,
- Gasofen (13) zur Erhitzung von Reduktionsgas oder Reduktionsgasvorläufer,
- Kraftwerk (9) zur Erzeugung von Elektrizität für die Eisen- und/oder Stahlerzeugung,
**dadurch gekennzeichnet, dass**
die Sauerstoff-Ausleitung (3)
in zumindest ein Mitglied der Gruppe bestehend aus den Mitgliedern
- Reduktionsgaszufuhrleitung (5) zur Zufuhr von Reduktionsgas in den Direktreduktionsreaktor (4),
- Reduktionsgasvorläuferleitung (6) zur Zufuhr von Reduktionsgasvorläufer zur Reduktionsgaszufuhrleitung (5) oder zu einer Reduktionsgas zubereitenden Vorrichtung,
- Brenner (7) zur Erhöhung der Temperatur eines Reduktionsgases oder eines Reduktionsgasvorläufers,
- Oxidationsmittelzuleitung (10) eines Reformerbrenners (11) eines Reformers (8) zur Zubereitung von Reduktionsgas oder von Reduktionsgasvorläufer,
- Gasofen (13) zur Erhitzung von Reduktionsgas oder Reduktionsgasvorläufer,
- Oxidationsmittelzufuhr (12) eines Kraftwerks (9) zur Erzeugung von Elektrizität für die Eisen- und/oder Stahlerzeugung,
mündet.

10. Anlagenverbund (1) nach Anspruch 9, **dadurch gekennzeichnet, dass** eine Dampfzuleitung (16) in die Wasserelektrolyse-Anlage mündet, wobei die Dampfzuleitung (16) von zumindest einem Mitglied der Gruppe bestehend aus den Mitgliedern
- Wärmetauscher (15) zum Wärmetausch mit Rauchgas des Reformers (8) zur Zubereitung von Reduktionsgas oder von Reduktionsgasvorläufer,
- Wärmetauscher zum Wärmetausch mit Rauchgas des Gasofens (13) zur Erhitzung von Reduktionsgas oder Reduktionsgasvorläufer,
- Wärmetauscher zum Wärmetausch mit Topgas aus dem Direktreduktionsreaktor (4),
- Wärmetauscher zum Wärmetausch mit aus einer Vorrichtung zur Kühlung von Produkt der Direktreduktion ausgeleitetem Kühlgas,
- Wärmetauscher zum Wärmetausch mit
aus einer Vorrichtung zur Aufheizung von
in der Wasserelektrolyse-Anlage (2) gewonnenem Wasserstoff ausgeleitetem Abgas,
ausgeht.

11. Anlagenverbund (1) nach Anspruch 9 oder 10, **dadurch gekennzeichnet, dass** zumindest eine Vorrichtung zur Vorwärmung zumindest eines bei der Eisen- und/oder Stahlerzeugung verwendeten Gases vorhanden ist, wobei diese zur Nutzung von Abwärme der Wasserelektrolyse-Anlage zur Vorwärmung geeignet ist.

12. Anlagenverbund (1) nach einem der Ansprüche 9 bis 11, **dadurch gekennzeichnet, dass** die Sauerstoff-Ausleitung (3) und eine von der Wasserelektrolyse-Anlage (2) ausgehende Wasserstoff-Ausleitung (18) zur Ausleitung von Wasserstoff aus der Wasserelektrolyse-Anlage (2)
in zumindest eine Reduktionsgasvorläuferleitung (17) zur Zufuhr von Reduktionsgasvorläufer zur Reduktionsgaszufuhrleitung (5) oder zu einer Reduktionsgas zubereitenden Vorrichtung münden,
wobei die Sauerstoff-Ausleitung (3)
vor
der Wasserstoff-Ausleitung mündet (18)
in Richtung entlang der Reduktionsgasvorläuferleitung (17) zur Reduktionsgaszufuhrleitung (5) oder in Richtung zur Reduktionsgas zubereitenden Vorrichtung gesehen.

13. Anlagenverbund (1) nach einem der Ansprüche 9 bis 12, **dadurch gekennzeichnet, dass** eine von der Wasserelektrolyse-Anlage (2) ausgehende Wasserstoff-Ausleitung (18) zur Ausleitung von Wasserstoff aus der Wasserelektrolyse-Anlage (2) vorhanden ist, und vom Direktreduktionsreaktor (4) eine Topgasrecycleleitung (19) zur Recyclierung von Topgas zum Reformer (8) ausgeht, wobei die Topgasreycleleitung (19) in eine Reformierungsgasleitung (20) zur Zufuhr von zu reformierendem Gas in den Reformer (8) mündet, in welche auch die Wasserstoff-Ausleitung (18) mündet,
und wobei in der Reformierungsgasleitung (20) eine Vorwärmvorrichtung (21) vorhanden ist vom Reformer (8) aus gesehen vor den Mündungen von Topgasrecycleleitung (19) und Wasserstoff-Ausleitung (18).

14. Anlagenverbund nach einem der Ansprüche 9 bis 13, **dadurch gekennzeichnet, dass** eine von der Wasserelektrolyse-Anlage (2) ausgehende Wasserstoff-Ausleitung (18) zur Ausleitung von Wasserstoff aus der Wasserelektrolyse-Anlage (2) vorhanden ist, und vom Direktreduktionsreaktor (4) eine Topgasrecycleleitung (19) zur Recyclierung von Topgas zum Gasofen (13) ausgeht, wobei die Topgasreycleleitung (19) in eine Gasofeneinleitung (22) zur Einleitung von zu erhitzendem Gas in den Gasofen (13) mündet, in welche auch die Wasserstoff-Ausleitung (18) mündet,
und wobei in der Gasofeneinleitung (22) eine Vorwärmvorrichtung (21) vorhanden ist vom Gasofen (13) aus gesehen vor den Mündungen von Topgasrecycleleitung (19) und Wasserstoff-Ausleitung (18).

15. Anlagenverbund nach einem der Ansprüche 9 bis 14, **dadurch gekennzeichnet, dass** eine von der Wasserelektrolyse-Anlage (2) ausgehende Wasserstoff-Ausleitung (18) zur Ausleitung von Wasserstoff aus der Wasserelektrolyse-Anlage (2) vorhanden ist, und eine Anlage zur Methanproduktion und/oder eine Anlage zur Methanolproduktion vorhanden ist, in die die Wasserstoff-Ausleitung (18) mündet, wobei die Anlage zur Methanproduktion und/oder die Anlage zur Methanolproduktion zumindest eine Zuleitung für CO2 aufweist.
